# EUROPÄISCHE PATENTSCHRIFT

(11) **EP 1 118 906 B1**
(45) Veröffentlichungstag und Bekanntmachung des Hinweises auf die Patenterteilung: **22.09.2004**
(21) Anmeldenummer: 00100752.5
(22) Anmeldetag: 14.01.2000
(51) Int. Cl.: G03C 5/26, B01J 2/00

(54) **Verfahren zur Granulierung mit zwei schmelzenden Hilfsstoffen**
Granulation process using two melting additives
Procédé de granulation au moyen de deux additifs fusibles

(43) Veröffentlichungstag der Anmeldung: 25.07.2001
(73) Patentinhaber: Tetenal Photowerk GmbH & Co, 22844 Norderstedt (DE)
(72) Erfinder: Hengefeld, Axel, Dr., 20249 Hamburg (DE)
(74) Vertreter: Glawe, Delfs, Moll & Partner

(56) Entgegenhaltungen:
- EP-A- 0 569 162
- EP-A- 0 913 190
- US-A- 5 885 663

## Beschreibung

Die Erfindung betrifft ein Verfahren zur Herstellung von als Granulat bzw. Tablette formulierten fotografischen Prozeßchemikalien.

Belichtete Silberhalogenidfilme werden in kommerziellen Labors vollautomatisch entwickelt und verarbeitet. Farbnegativfilme beispielsweise durchlaufen dabei ein Entwicklerbad, ein Bleichbad, ein Fixierbad und in der Regel ein Stabilisierbad bzw. mehrere Waschschritte. Die Schritte des Bleichens und Fixierens können ggf. mittels eines Bleichfixierbades in einem einzigen Verarbeitungsschritt kombiniert werden. Die fertig entwickelten Negative werden auf Colorpapier belichtet, das belichtete Colorpapier durchläuft anschließend ebenfalls ein Entwicklungsbad, in der Regel ein kombiniertes Bleichfixierbad und abschließende Waschschritte. Die Waschschritte können ggf. durch ein Stabilisierbad ersetzt werden.

Die verschiedenen Verarbeitungsbäder erschöpfen sich im laufe der Verwendung. Während ein Fotoamateur erschöpfte Bäder in der Regel auswechselt, erfolgt bei kommerziellen Fotolabors eine Auffrischung verbrauchter Lösungen. Im Handel sind zu diesem Zweck die entsprechenden Prozeßchemikalien als Flüssigkonzentrate oder Pulver erhältlich.

Flüssigkonzentrate benötigen aufgrund ihres Wasseranteils bei Transport und Lagerung verhältnismäßig viel Platz. Die leeren Konzentratbehälter stellen ein erhebliches Abfallvolumen dar.

Chemikalien in Pulverform sind schwierig zu handhaben. Da die Pulver bei der Handhabung stauben können, müssen Vorkehrungen zur Vermeidung gesundheitlicher Beeinträchtigungen der Anwender getroffen werden.

Es ist daher bereits vorgeschlagen worden (EP-A 0 678 782), fotografische Prozeßchemikalien als Granulat zu formulieren. Es werden verschiedene Varianten der Feuchtgranulierung (beispielsweise Wirbelschichtgranulierung) eingesetzt.

Bekannt ist es ebenfalls, aus einem Granulat und ggf. weiteren pulverförmigen Bestandteilen Tabletten zu pressen (EP-A 0 678 782). Die fotografischen Verarbeitungsmaschinen weisen Vorratsmagazine für solche Tabletten auf und dosieren diese nach Bedarf automatisch in die jeweiligen Bäder ein. Gebräuchlich ist die Bereitstellung der fotografischen Prozeßchemikalien in Form von Tabletten insbesondere bei kleineren automatischen Entwicklungsmaschinen, die in sog. Minilabs verwendet werden. Die Tabletten müssen eine ausreichende Härte und Abriebfestigkeit aufweisen, damit die automatische Handhabung in den Magazinen nicht zu Tablettenbruch führt und der Betrieb nicht durch Tablettenabrieb beeinträchtigt wird. Diese Eigenschaften der Tablette müssen auch nach längerer Lagerung gewährleistet sein.

Aus EP-A-0 913 190 ist es bereits bekannt, die Schmelzgranulierung zur Herstellung von als Granulat oder Tablette formulierten photographischen Prozeßchemikalien einzusetzen.

Der vorliegenden Erfindung liegt die Aufgabe zugrunde, ein Verfahren der eingangs genannten Art zu schaffen, durch das sich auch empfindliche photographische Prozeßchemikalien in lagerstabile Granulate bzw. Tabletten formulieren lassen.

Das erfindungsgemäße Verfahren zur Herstellung von als Granulat formulierten photographischen Prozeßchemikalien weist folgende Schritte auf:
a) Zusammengeben der Prozeßchemikalien mit wenigstens einem fotografisch inerten oder fotografisch förderlichen, wasserlöslichen, oberhalb 40°C schmelzenden ersten Hilfsstoff;
b) Erwärmen der Mischung auf eine Temperatur, die mindestens der Schmelztemperatur des ersten Hilfsstoffs entspricht;
c) Durchführen einer ersten Schmelzgranulierung unter Vermischung von Prozeßchemikalien und erstem Hilfsstoff;
d) Zusammengeben des in Schritt c) erhaltenen Granulats und ggf. weiterer fotografischer Prozeßchemikalien mit wenigstens einem fotografisch inerten oder fotografisch förderlichen, wasserlöslichen zweiten Hilfsstoff mit einer unter der Schmelztemperatur des ersten Hilfsstoffs liegenden Schmelztemperatur;
e) Erwärmen der Mischung auf eine Temperatur, die mindestens der Schmelztemperatur des zweiten Hilfsstoffs entspricht;
f) Durchführen einer zweiten Schmelzgranulierung unter Vermischung von Granulat aus Schritt c), ggf. weiterer Prozeßchemikalien und zweitem Hilfsstoff.

Kern der Erfindung ist die Schmelzgranulierung, die auch als thermoplastische Granulierung bezeichnet wird. Die Granulatbindung wird bei diesem Vorgang mit Hilfe eines niedrig schmelzenden Hilfsstoffes unter Zufuhr von thermischer Energie (diese kann auch als mechanische Energie zugeführt und in der Mischung in thermische Energie umgewandelt werden) durchgeführt. Wasser oder andere bei Raumtemperatur flüssige Lösungsmittel werden nicht zugesetzt.

Die verwendeten ersten bzw. zweiten Hilfsstoffe schmelzen vorzugsweise oberhalb 45°C bzw. 25°C, weiter vorzugsweise oberhalb 50°C bzw. 30°C. Dies bedeutet, daß der jeweilige Hilfsstoff oberhalb der genannten Temperatur einen Aggregatzustand einnimmt, indem er die in der Regel als Pulver zugegebenen fotografischen Prozeßchemikalien binden und in eine Granulatform überführen kann. Unter "Schmelzen" im Sinne der Erfindung ist dabei jede Art der Erweichung zu verstehen, die zum Erzielen einer solchen Bindungs- und Granulierwirkung ausreicht. Ein vollständiger Übergang in die flüssige Phase ist zu diesem Zweck nicht unbedingt erforderlich. Insbesondere polymere Hilfsstoffe zeigen zudem keinen scharfen Schmelzpunkt, sondern einen mehr oder weniger breiten Erweichungsbereich. Das Kriterium "Schmelzen" im Sinne der Erfindung ist bereits dann erfüllt, wenn die Erweichung oberhalb der jeweiligen Temperatur ausreichend fortgeschritten ist, um die beschriebene Bindewirkung zu erfüllen.

Die verwendeten Hilfsstoffe sind fotografisch inert oder fotografisch förderliche Rezepturbestandteile. Dies bedeutet, daß der jeweilige fotografische Verarbeitungsprozeß, in dem das Granulat bzw. eine daraus hergestellte Tablette eingesetzt werden soll, entweder durch die Anwesenheit der Hilfsstoffe nicht oder allenfalls in unwesentlicher Weise nachteilig beeinflußt wird oder aber der Hilfsstoff selbst eine fotochemisch aktive Komponente der Rezeptur darstellt.

Die Hilfsstoffe sind wasserlöslich. Eine unter Verwendung der Hilfsstoffe hergestellte Prozeßchemikalie löst sich bei Einstellung üblicher Konzentrationen der Prozeßchemikalien in wäßriger Lösung und bei den üblichen Badtemperaturen und pH-Werten vollständig auf. Dazu muß der Hilfsstoff selbst nicht unbedingt wasserlöslich sein. Es kann sich beispielsweise um eine als solche wasserunlösliche und hydrophobe Säure handeln (z.B. Sebacin-, Azelain- oder Dodecainsäure), die sich in alkalischem Milieu zu einem gut wasserlöslichen Salz umsetzt. Die Hilfsstoffe müssen in einem solchen Umfang wasserlöslich sein, daß dieses Auflösen zur Einstellung der gewünschten Badkonzentration nicht behindert wird.

Bei der Durchführung des erfindungsgemäßen Verfahrens wird die Mischung zunächst auf eine Temperatur erwärmt, die mindestens der Schmelztemperatur des ersten Hilfsstoffs entspricht. Wie oben bereits ausgeführt, muß der Hilfsstoff nicht notwendigerweise einen scharfen Schmelzpunkt aufweisen. Unter einem Erwärmen auf mindestens die Schmelztemperatur ist dann zu verstehen, daß die Temperatur soweit erhöht wird, daß der Hilfsstoff erweicht und im Rahmen der Schmelzgranulierung seine die übrigen Bestandteile der Mischung als Granulat bindende Wirkung ausüben kann.

Anschließend wird erfindungsgemäß ein zweiter Schmelzgranulierschritt mit einem niedriger schmelzenden zweiten Hilfsstoff durchgeführt. Die Differenz der Schmelz- bzw. Erweichungstemperaturen der beiden Hilfsstoffe muß so gewählt werden, daß bei diesem zweiten Schmelzgranulierschritt das Granulat aus dem ersten Schmelzgranulierschritt nicht oder allenfalls in geringem Maße wieder aufgeschmolzen wird. Vorzugsweise beträgt die Differenz der Schmelz- bzw. Erweichungstemperaturen der beiden Hilfsstoffe wenigstens 20 K, weiter vorzugsweise wenigstens 30 K. In dem zweiten Schmelzgranulierschritt kann entweder lediglich das im ersten Schmelzgranulierschritt erzeugte Granulat mit einer zweiten, niedriger schmelzenden Hilfsstofhülle versehen werden; alternativ ist es möglich, bei diesem zweiten Schmelzgranulierschritt weitere Prozeßchemikalien zuzugeben. In diesem Fall werden dann gleichzeitig sowohl diese weiteren Prozeßchemikalien mit dem zweiten Hilfsstoff granuliert und das erste, höher schmelzende Granulat mit diesem zweiten Granulat zu einem Mischgranulat formuliert.

Der Kern der Erfindung liegt in der Erkenntnis, daß es durch zwei sequentiell durchgeführte Schmelzgranulierschritte einerseits möglich ist, besonders empfindliche Prozeßchemikalien mit einer doppelten Schutzhülle aus unterschiedlichen Hilfsstoffen zu versehen, die zwei Barrieren mit unterschiedlicher Funktionalität gegen Umwelteinflüsse (Feuchtigkeit, Wärme, Alkalien und dergleichen) bilden kann, daß es andererseits aber mittels der Erfindung auch möglich ist, an und für sich inkompatible Prozeßchemikalien in ein einheitliches Granulat bzw. eine Tablette zu formulieren, in dem man die gemeinsam zu formulierenden Prozeßchemikalien beispielsweise in zwei miteinander nicht verträgliche Gruppen aufteilt. Die erste Gruppe wird dann zunächst mit dem höher schmelzenden ersten Hilfsstoff schmelzgranuliert, anschließend wird die zweite Gruppe gemeinsam mit dem ersten Schmelzgranulat und dem zweiten Hilfsstoff zu dem fertigen Granulat schmelzgranuliert. Bei diesem zweiten Schmelzgranulierschritt schmilzt der erste Hilfsstoff nicht mehr auf, so daß die miteinander inkompatiblen Prozeßchemikaliengruppen nicht miteinander in Berührung kommen und auch während der Lagerung des Granulats oder der Tablette voreinander geschützt sind.

Beispielsweise sind saure Farbentwicklersubstanzen wie CD-3 oder CD-4 einerseits und die in Farbentwicklern stets vorhandenen Alkalien miteinander nicht kompatibel. Erfindungsgemäß kann man die sauren Entwicklersubstanzen zunächst mit einer an und für sich wasserunlöslichen, hydrophoben Säure wie z. B. Sebacin-, Acelain- oder Dodecandisäure als ersten Hilfsstoff ummanteln. Diese erste Granulathülle kann wiederum mit einer niedrig schmelzenderen zweiten Hilfsstoffschicht beispielsweise aus Polyethylenglykol umhüllt werden. Diese Polyethylenglykolschicht schützt den hydrophoben Säuremantel vor dem Angriff der Alkalien. Auf diese Weise können die Entwicklersubstanzen einerseits und die Alkalien (entweder als Pulver oder ihrerseits als Granulat) andererseits in ein einziges Granulat bzw. eine einzige Tablette formuliert werden. Beim Lösen des Granulats bzw. der Tablette in Wasser löst sich zunächst die Polyethylenglykolschicht, das alkalische Milieu der wäßrigen Lösung löst dann die innere hydrophobe Säureschicht durch Salzbildung, so daß die Entwicklersubstanzen freigesetzt werden.

Ein weiterer Vorteil der Erfindung liegt darin, daß man zwei unterschiedlichen Granulatschichten unterschiedliche Funktionen zuweisen kann. Beispielsweise kann die hochschmelzende innere Granulathülle in erster Linie die eingeschlossenen Substanzen vor chemischen Angriffen schützen, während die niedrig schmelzende(re) äußere Hülle für gute physikalische bzw. mechanische Eigenschaften des Granulats (geringer Abrieb, gute Verpreßbarkeit) sorgen kann.

Beim erfindungsgemäßen Verfahren müssen die Pülvermischung und der jeweilige Hilfsstoff auf die gewünschte Temperatur (in der Regel wird diese etwa zwischen 40 und 100°C liegen) erwärmt werden. Gleichzeitig wird in einem Mischer mechanisch vermischt, die in der Regel feinkörnigen Pulverbestandteile der Verarbeitungschemikalie verkleben dabei mit dem Hilfsstoff untereinander und agglomerieren zu größeren Partikeln. Das anschließende Abkühlen kann an der Raumluft erfolgen. Weder die eingesetzten Chemikalien noch das erhaltene Granulat müssen einem Trocknungsschritt unterworfen werden.

Alternativ ist es möglich, einen oder beide Schmelzgranulierschritte durch Aufdüsen bzw. Aufsprühen des schmelzbaren Hilfsstoffes auf die Pulvermischung durchzuführen. Diese Pulvermischung kann Raumtemperatur aufweisen oder vorzugsweise auf eine Temperatur im Bereich der Schmelztemperatur des Hilfsstoffes erwärmt sein.

Es ist bekannt, daß bei der im Stand der Technik verwendeten Wirbelschichtgranulation ein Granulat mit einem hohen spezifischen Volumen und einer sehr unregelmäßigen Oberflächenstruktur entsteht. Dies erleichtert das anschließende Verpressen des Granulats zu harten, bruch- und abriebfesten Tabletten. Bei der Schmelzgranulierung entsteht demgegenüber ein Granulat mit geringerem spezifischen Volumen (d. h. höherer spezifischer Schüttdichte) und einer gleichmäßigeren Oberflächenstruktur. Es lassen sich aus diesem Granulat Tabletten ausreichender Härte und Abriebfestigkeit herstellen, die zudem diese gewünschten Eigenschaften auch nach längerer Lagerung nicht verlieren.

Erfindungsgemäß können alle Bestandteile eines fotografischen Verarbeitunsbades (beispielsweise Entwicklungs-, Bleich-, Fixier-, Bleichfixier-, oder Stabilisierbades) in einem einzigen Granulat vereinigt werden, alternativ können lediglich ein oder einige Bestandteile eines solchen Bades zu einem Granulat verarbeitet werden. Die übrigen Bestandteile können dann entweder als separat hergestelltes Granulat zugegeben werden oder aber man verpreßt eine Kombination von einem oder mehreren erfindungsgemäß hergestellten Granulaten und ggf. verbleibenden Pulverbestandteilen zu einer Tablette.

Die verwendeten Hilfsstoffe bzw. Hilfsstoffgemische sind vorzugsweise bei 30 - 180°C, weiter vorzugsweise 40 - 130°C schmelzbar. Besonders bevorzugt ist der Bereich von 50 - 70°C für den niedriger schmelzenden zweiten Hilfsstoff und 70 - 100°C für den ersten Hilfsstoff. Zur technischen Bedeutung des Begriffs "schmelzbar" bzw. "Schmelztemperatur" wird auf die obigen Erläuterungen verwiesen.

Die verwendeten Hilfsstoffe enthalten vorzugsweise organische Oligo- oder Polymere oder aber monomere Stoffe mit Schmelz- bzw. Erweichungsbereichen im gewünschten Temperaturfenster. Bevorzugt kann der Hilfsstoff Polyethylenglykol, Polyvinylalkohole, Polyacrylate bzw. Polymethacrylate enthalten. Unter den Polyacrylaten bzw. -methacrylaten sind beispielsweise Aminoalkylmethacrylatcopolymere, Methacrylsäure-Methacrylatcopolymere, und Methacrylsäure-Acrylatcopolymere verwendbar. Verwendbar als Hilfsstoff bzw. Bestandteil eines Hilfsstoffes sind ferner Carbonsäuren wie beispielsweise Ascorbinsäure, Maleinsäure oder andere Dicarbonsäuren; Propanole, Propandiole und Butanole wie beispielsweise 2-Methyl-2-propyl-1,3-propandiol, 2,2-Dimethyl-1,3-propandiol, 2-Butyl-2-ethyl-1,3-propandiol, 2-Ethyl-2-(hydroxymethyl)-1,3-propandiol, 2-(Hydroxymethyl)-2-methyl-1,3-propandiol, 2,2-Dimethyl-1-propanol, 2,3,3-Trimethyl-2-butanol, 2-Amino-2-methyl-1,3-propandiol; höhere Alkohole mit mehr als 12 C-Atomen; ferner Polyalkohole wie beispielsweise Zuckeralkohole oder Zucker sowie Tenside. Unter den Polyalkoholen seien beispielsweise Threit, Erythrit, Pentaerythrittetraacetat, Arabit, Adonit, Xylit, Sorbit und Mannit genannt.

Die nachfolgende Auflistung enthält eine nicht erschöpfende Zusammenstellung verwendbarer Hilfsstoffe mit Schmelz- bzw. Erweichungspunkten im Bereich 43 bis etwa 150°C.

| | **Fp.** | |
|---|---|---|
| **Substanz** | **von** | **bis** |
| Diisopropanolamin | 43 | |
| Laurinsäure (Dodecansäure) | 43 | |
| Neopentylglykol-dibenzoat | 45 | 51 |
| N-tert-Butyl-diethanolamin (N-tert-Butyl-2,2'-iminodiethanol) | 47 | 50 |
| Triisopropanolamin | 48 | 52 |
| 3-Hydroxy-2,2-dimethylpropyl-3-hydroxy-2,2-dimethylpropionat | 50 | 54 |
| Dimethyloxalat (Oxalsäuredimethylester) | 50 | 54 |
| 2,2,4-Trimethyl-1,3-pentandiol | 52 | 56 |
| Glutarsäureanhydrid | 52 | |
| Maleinsäureanhydrid | 52 | |
| Polyethylenglykol-dimethylether 2000 | 52 | 55 |
| Acetoacetamid | 53 | |
| Myristinsäure (Tetradecansäure) | 53 | |
| Pluronic PE 6800 (nichtionisch/schaumarm) | 53 | |
| 1-Hexadecanol (Cetylalkohol) | 54 | 56 |
| Pyrazin | 54 | 56 |
| Neopentylalkohol (2,2-Dimethyl-1-propanol) | 55 | 57 |
| Sorbit-Monostearat (SPAN 60) | 56 | 58 |
| 2-Ethyl-2-(hydroxymethyl)-1,3-propandiol | 56 | 59 |
| 1,1,1-Tris(hydroxymethyl)propan (Trimethylolpropan) | 56 | |
| 1-Octadecanol (Stearylalkohol) | 56 | |
| Polyethylenglykol-mono-methylether | 56 | |
| p-Anisidin (4-Methoxyanilin) | 57 | 60 |
| 2-Methyl-2-propyl-1,3-propandiol MPP | 58 | |
| 2,2-Diethyl-1,3-propandiol | 59 | 61 |
| 4-Methylbenzylalkohol | 59 | 61 |
| 1,3,5-Trioxan (symm.) meta-Formaldehyd | 59 | |
| 2,3,6-Trimethylphenol | 59 | |
| Benzolsulfonsäure | 60 | |
| Isosorbide (Dianhydro-D-glucitol) | 61 | 63 |
| 2-Methylpiperazin | 61 | |
| Palmitinsäure (Hexadecansäure) | 61 | |
| Dicyclohexylphthalat (Phthalsäuredicyclohexylester) | 62 | 64 |
| 1,2-Tetradecandiol | 62 | |
| 3,6-Dithia-1,8-octandiol (HS 104) | 64 | |
| Rewomid IPL 203 | 64 | |
| Stearinsäure | 67 | 69 |
| 6-Caprolactam | 68 | 70 |
| Biphenyl | 68 | 70 |
| Glycerin-tribenzoat | 68 | 72 |
| 1,10-Decandiol | 73 | |
| 2,5-Dimethyl-2,5-hexandiol | 87 | |
| D-Ribose | 88 | 92 |
| Imidazol | 89 | 91 |
| Tribenzylamin | 91 | 94 |
| Boran-Trimethylamin Komplex | 92 | 94 |
| Sucrose-Benzoat (Plasticizer) | 93 | 100 |
| Rewomid S 290 oder 280 (Rewo) | 93 | |
| Benzil | 94 | 95 |
| Xylit | 94 | 96 |
| 1-Naphthol | 95 | 96 |
| 4-Hydroxybenzoesäure-propylester (Propylparaben) | 95 | 97 |
| Glutarsäure | 95 | 98 |
| 3-Aminoacetophenon | 96 | 98 |
| Benzotriazol | 97 | 99 |
| 1,4-Cyclohexandiol | 98 | 100 |
| 2-Amino-4-methylpicolin (2-Amino-4-methylpyridin) | 98 | 100 |
| D-Sorbit | 98 | 100 |
| o-Anissäure | 98 | 100 |
| tert-Butylaminoboran | 98 | 100 |
| D(+)-Äpfelsäure | 98 | 102 |
| 1,3-Dimethylharnstoff (N,N'-Dimethylharnstoff) | 101 | 104 |
| 2-Phenyl-2-imidazolin | 102 | 104 |
| 2-Amino-2-methyl-1,3-propandiol AMPD | 102 | 105 |
| m-Hydroxybenzaldehyd | 103 | 105 |
| o-Toluylsäure (2-Methylbenzoesäure) | 103 | 105 |
| Pimelinsäure (Heptandicarbonsäure) | 103 | 105 |
| p-Toluolsulfonsäure Monohydrat | 103 | 106 |
| Catechol (Pyrocatechol) | 104 | 106 |
| 2-Aminobenzophenon | 105 | 108 |
| 4-Hydroxyacetophenon | 106 | 108 |
| 3,5-Dimethylpyrazol | 107 | 109 |
| 2,2'-Dihydroxybiphenyl | 108 | 110 |
| 4-Aminoantipyrin | 108 | 110 |
| Piperazin | 108 | 110 |
| Di(trimethylolpropan) | 108 | 111 |
| Azelainsäure (Nonandicarbonsäure) | 109 | 111 |
| Methacrylamid | 109 | 111 |
| Tetraethylammonium-p-Toluolsulfonat | 110 | 114 |
| Picolinamid | 110 | |
| Antipyrin | 111 | 114 |
| Anthranilamid (2-Aminobenzamid) | 112 | 114 |
| Ethyloxamat (Oxalsäuremonoethylesteramid) | 114 | 116 |
| 4-Hydroxybenzoesäure-ethylester (Ethylparaben) | 114 | 117 |
| 1,10-Phenanthrolin | 114 | 117 |
| L-Ascorbinsäure-6-palmitat | 115 | 118 |
| Butyramid (Buttersäureamid) | 116 | |
| Pyridin-p-toluolsulfonat | 117 | 119 |
| Aminopyrazin | 119 | 120 |
| Bernsteinsäureanhydrid | 119 | 120 |
| 1,2,4-Triazol | 119 | 121 |
| D-Maltose Monohydrat | 119 | 121 |
| D(-)-Fructose | 119 | 122 |
| D-Fructose | 119 | 122 |
| Guanidinthiocyanat | 120 | 122 |
| Mandelsäure | 120 | 122 |
| Tetrabutylammoniumrhodanid | 120 | 123 |
| Hydrochinondiacetat | 121 | 123 |
| Ammoniumhydrogensulfat | 121 | 145 |
| Benzoesäure | 122 | 123 |
| Phenidon | 122 | 123 |
| Succinimid (Bernsteinsäureimid) | 123 | 125 |
| Neopentylglykol (2,2-Dimethyl-1,3-propandiol) | 123 | 127 |
| 3-Aminophenol | 124 | 126 |
| 4-Hydroxybenzoesäure-methylester (Methylparaben) | 126 | 128 |
| Benzamid | 128 | 129 |
| Dodecandicarbonsäure (Dodecandisäure) | 128 | 130 |
| Nicotinsäureamid | 130 | 132 |
| DL-Äpfelsäure | 131 | 133 |
| Phthalsäureanhydrid | 131 | 133 |
| 2-Imidazolidon (N,N'-Ethylenharnstoff) | 133 | 135 |
| Harnstoff | 133 | 135 |
| Sebacinsäure | 133 | 137 |
| Sorbinsäure (2,4-Hexadiensäure) | 133 | 135 |
| Pyridincarbonsäure(2) (Picolinsäure) | 134 | 137 |
| Toluol-4-sulfonamid | 137 | 140 |
| Sokalan DCS (BASF) | 143 | |
| Phenylharnstoff | 145 | 147 |
| Benzolsulfonamid | 150 | 152 |

Bei einer bevorzugten Ausführungsform der Erfindung enthält wenigstens einer der Hilfsstoffe (bevorzugt der zweite Hilfsstoff) Polyethylenglykole. In dem Polyethylenglykol können weitere Hilfsstoffbestandteile gelöst und/oder suspendiert sein. Diese weiteren Hilfsstoffbestandteile können beispielsweise aus den oben genannten Stoffen ausgewählt werden. Es können auch Stoffe verwendet werden, die selbst bei der Arbeitstemperatur des erfindungsgemäßen Verfahrens nicht schmelzbar sind, sich jedoch im geschmolzenem Polyethylenglykol oder sonstigen geschmolzenen Hilfsstoffbestandteilen lösen oder darin suspendiert werden. Beispielsweise seien hier Cellulosederivate, Stärke und Dextrindervivate sowie Polyvinylpyrrolidone und nicht schmelzbare Polyoxycarbonsäuren genannt.

Gegenstand der Erfindung ist ferner ein Verfahren zur Herstellung von als Tablette formulierten fotografischen Prozeßchemikalien, das folgende Schritte aufweist:
a) Schmelzgranulieren wenigstens eines Teils der Tablettenrohstoffe in einem Verfahren gemäß einem der Patentansprüche 1 bis 17
b) Verpressen des Schmelzgranulats und ggf. der verbleibenden Tablettenrohstoffe zu einer Tablette.

Dieses Verfahren nutzt somit ein oder mehrere der erfindungsgemäß hergestellten Granulate als Ausgangsstoffe und verarbeitet diese weiter zu Tabletten. Der Begriff "Tablette" bezeichnet im Rahmen der Erfindung jeglichen Festkörper, der eine durch das Verpressen herbeigeführte definierte Form aufweist.

Erfindungsgemäß können sämtliche für ein Verarbeitungsbad benötigten Prozeßchemikalien zunächst schmelzgranuliert und zu einem oder mehreren Granulaten verarbeitet werden, anschließend erfolgt die Verpressung des Granulats oder der Granulate zu einer Tablette. Ebenfalls möglich ist es im Rahmen der Erfindung, nur einen Teil der in der Regel pulverförmigen Bestandteile des fotografischen Verarbeitungsbades (Tablettenrohstoffe) zu einem oder mehreren Schmelzgranulaten zu verarbeiten und das Granulat bzw. die Granulate mit den vorzugsweise noch in Pulverform vorliegenden verbleibenden Tablettenrohstoffen zu einer Tablette zu verpressen. Der Granulatanteil einer solchen Tablette muß ausreichend hoch sein, um die gewünschte Härte und Abriebfestigkeit sicherzustellen.

Schmelzgranulate weisen, wie oben bereits beschrieben, in der Regel ein geringes spezifisches Volumen (eine hohe Schüttdichte) auf und besitzen eine gleichmäßige Oberflächenstruktur. Dies läßt zunächst erwarten, daß aus solchen Schmelzgranulaten verpreßte Tabletten nur eine geringe Härte aufweisen. Überraschenderweise ist dies nicht der Fall, die erfindungsgemäß hergestellten Tabletten weisen eine hohe Härte auf, die bei längerer Lagerung sogar noch zunehmen kann. Die Abriebfestigkeit ist ebenfalls so hoch, daß im Falle einer Verwendung in sog. Minilabs der automatische Betrieb der Vorratsmagazine und Tablettenzuführungen nicht beeinträchtigt wird.

Die Härte einer Tablette wird gemessen mit einem Bruchfestigkeitstester TBH30 der Fa. ERWEKA. Die zu prüfende Tablette wird zwischen zwei ausfahrbare Backen eingespannt und mit einer ansteigenden Kraft beaufschlagt. Die zum Zerbrechen der Tablette erforderliche Kraft wird registriert (in N) und als Maß für die Tablettenhärte angegeben.

Da im Rahmen des erfindungsgemäßen Verfahrens keine wäßrigen Lösemittel verwendet werden, können die Hilfsstoffe auch hygroskopische und/oder feuchtigkeitsempfindliche Bestandteile wie beispielsweise Sorbit enthalten.

Die chemisch aktiven Bestandteile eines erfindungsgemäß herzustellenden Granulats bzw. einer solchen Tablette sind dem Fachmann geläufig und bedürfen keiner näheren Erläuterung. Beispielhaft seien typische Bestandteile eines erfindungsgemäß als Granulat bzw. Tablette formulierten Farbentwicklers genannt:
1. Die eigentliche Farbentwicklerchemikalie. Geeignete Entwicklersubstanzen sind dem Fachmann geläufig. Bevorzugt handelt es sich um N,N-dialkylierte p-Phenylendiaminderivate. Bspw. können entsprechende Derivate verwendet werden, die dem Fachmann unter der Bezeichnung CD-2, CD-3, CD-4 und CD-6 geläufig sind. Eine Beschreibung einiger geeigneter Farbentwickler findet sich in Ullmann's Encyclopedia of Industrial Chemistry, 5. Aufl., Bd. A20, S. 70 ff.
2. Puffer: Da Farbentwickler üblicherweise pH-Werte oberhalb von 9 benötigen, enthält die Entwicklerlösung in der Regel Puffer sowie ggf. alkalische Substanzen. Geeignet sind bspw. Alkali- und Hydrogencarbonate, Phosphate, Borate, Tetraborate, o-Hydroxybenzoate, Hydroxide und dergleichen. Alkalische Amine wie bspw. Mono-, Di- oder Triethanolamin, bzw. deren Salze, können gleichfalls zugesetzt werden.
3. Wasserenthärtungsmittel: Beim Arbeiten im alkalischen Bereich muß verhindert werden, daß im zur Zubereitung der fertigen Entwicklerlösung verwendeten Wasser ggf. vorhandene Alkali- und Erdalkaliionen als unlösliche Salze ausfallen. Als Wasserenthärtungsmittel werden vorzugsweise Komplexbildner, besonders bevorzugt Chelatbildner, eingesetzt. Als anorganische Komplexbildner können bspw. Polymetaphosphate und Polyorthophosphate eingesetzt werden. Bevorzugt werden jedoch organische Chelatbildner, bspw. in Form von Hydroxycarbonsäuren, eingesetzt. Geeignete Chelatbildner sind dem Fachmann geläufig und bspw. in Ullmann's Encyclopedia of Industrial Chemistry, 5. Aufl., Bd. A10, S. 95 ff. sowie in EP-A-0 415 455, S. 14 beschrieben. Sie umfassen bevorzugt Aminoessigsäurederivate wie bspw. Nitrilotriessigsäure (NTA), Ethylendiamintetraessigsäure (EDTA), Diethylentriaminpentaessigsäure (DTPA), Hydroxyethandiphosphonsäure (HEDP), Aminotrimethylenphosphonsäure (ATMP), Salze der vorgenannten Stoffe und dergleichen.
4. Optische Aufheller: Als optische Aufheller werden insbesondere Stilbenderivate wie bspw. Stilben-2,2-disulfonsäuren verwendet. Geeignete Aufheller werden bspw. von der Ciba Geigy AG unter den Namen Tinopal SFP® vertrieben. Es handelt sich um 4,4'-Bis-2-diethylamino-4-(2,5-disulfophenylamino)-s-triazinyl-6-aminostilben-2,2'-disulfonsäurenatriumsalz.
5. Konservierungsmittel/Antioxidantien: Hier werden insbesondere Hydroxylaminderivate eingesetzt, die bspw. aus EP-A-682 289 bekannt sind. Bei Bedarf können zusätzlich andere Antioxidantien wie bspw. Sulfite eingesetzt werden.
6. Antischleiermittel: Als Antischleiermittel (antifoggants) werden insbesondere Halogenidionen (bevorzugt Chloride oder Bromide) eingesetzt, die bspw. in Form der Alkalihalogenide eingesetzt werden. Organische Antischleiermittel können ggf. ebenfalls zugesetzt werden, insbesondere Stickstoffheterocyclen wie bspw. Benzotriazol, 6-Nitrobenzimidazol, 5-Methylbenzotriazol, 5-Nitrobenzotriazol, 5-Chlorbenzotriazol und dergleichen.
7. Lösevermittler, Emulgatoren: Zu diesem Zweck sind jegliche oberflächenaktive Stoffe geeignet. Es können bspw. Arylsulfonsäuren, Arylphosphonsäuren, aliphatische und aromatische Carbonsäuren, ggf. in oligomerisierter oder polymerisierter Form, verwendet werden.
8. Zusatzstoffe, die die Beständigkeit gegenüber Feuchtigkeit erhöhen und/oder als Bindemittel dienen und/oder das Löseverhalten des Farbentwicklers beim Ansetzen der fertigen Lösung verbessern. Diese Zusatzstoffe sind bereits in EP-A-0 589 624, EP-A-0 682 289 und EP-A-0 687 951 beschrieben, auf die entsprechenden Offenbarungen wird Bezug genommen. Bevorzugt werden als Zusatz- bzw. Füllstoffe Mono-, Oligo- und/oder Polysaccharide, Zuckeralkohole, Derivate der vorgenannten Stoffe (insbesondere Amino- und/oder Thioderivate) sowie Polyether (insbesondere Polyethylen- und/oder -propylenglykole) verwendet. Der Begriff Oligosaccharide bezeichnet Zucker mit 2 bis 7 Saccharideinheiten im Molekül. Die Zuckeralkohole Mannit, Sorbit und/oder Polyethylenglykol sind als Zusatz- bzw. Füllstoff besonders bevorzugt. Als andere geeignete Polysaccharide seien beispielhaft genannt Malzzucker, Cellobiose, Trehalose, Gentiobiose, Isomaltose, Milchzucker, Raffinose, Gentianose, Stachyose, Xylan, Araban, Glycogen, Dextran, Inulin, Levan, Galactan, Agarose, Amylose, Sucrose und Agarobiose. Im übrigen wird hier insbesondere auf die Aufzählung geeigneter Saccharide in EP-A-0 682 289 Bezug genommen. Für die Offenbarung geeigneter Polyether wird insbesondere auf EP-A-0 687 951 Bezug genommen.

Die Aufzählung dieser möglichen Bestandteile ist nicht abschließend, dem Fachmann ist geläufig, daß ggf. einige der genannten Bestandteile weggelassen bzw. andere Bestandteile, bspw. Entwicklungsbeschleuniger, zugefügt werden können.

Hinsichtlich möglicher Bestandteile eines Granulats bzw. einer Tablette zur Herstellung von Bleich/Fixierbädern, Stabilisierbädern oder anderen im Rahmen der Verarbeitung von Silberhalogenidfilmen verwendeten Bädern wird beispielhaft verwiesen auf die Offenbarung in Ullmanns Encyclopedia of Industrial chemistry, 5. Auflage, Band A20, Kapitel "Photography".

Die Erfindung wird nachfolgend anhand von Beispielen erläutert. Ein erfindungsgemäß hergestelltes Granulat wird im Rahmen dieser Beispiele auch als Doppelschmelzgranulat bezeichnet.

### I. Herstellung von Tabletten zur Entwicklung von Röntgenfilmen

### Beispiel 1

Entsprechend der in Tabelle 1 wiedergegebenen Rezeptur zum Ansatz von 1 Liter Röntgenentwickler-Regenerator wurden die siebzigfachen Mengen der Einzelkomponenten in einen handelsüblichen LÖDIGE M5 Chargenmischer mit beheizbarem Doppelmantel gegeben:
140 g Phenidon, 1,68 kg Hydrochinon, 25,2 g Natriumdisulfit, 0,7 g Phenyl-mercaptotetrazol, 9,1 g 5,6-Nitrobenzimidazolnitrat und 168 g des hochschmelzenden Binders (siehe Tabelle 2).

Mit Hilfe eines drucküberlagerten Temperiersystems (SINGLE STW) war die Temperatur des Wassers im Doppelmantel auf 10 °C über dem Schmelzpunkt des hochschmelzenden Binders (siehe Tabelle 2) eingestellt worden. Nach einer Mischzeit von 8 Minuten mit zusätzlich eingeschaltetem Messerkopf war ein Schmelzen bzw. Erweichen des hochschmelzenden Binders sichtbar und die ursprünglich eingesetzte Pulvermischung war zu einem staubfreien Granulat agglomeriert. Der Messerkopf wurde abgeschaltet und die Temperatur des Wassers im Doppelmantel auf 8 °C über den Schmelzpunkt des niedrigschmelzenden Binders (siehe Tabelle 2) abgesenkt. Nachdem das Schmelzgranulat im Innern des Chargenmischers eine Temperatur von 12 °C über dem Schmelzpunkt des niedrigschmelzenden Binders erreicht hatte, wurden 126 g des niedrigschmelzenden Binders zugegeben und der Messerkopf eingeschaltet. Nach etwa 2 min begann der niedrigschmelzende Binder zu erweichen bzw. zu schmelzen. Nach 1 min wurde das Doppelschmelzgranulat aus dem Chargenmischer entleert und an der Luft auf Raumtemperatur abgekühlt.

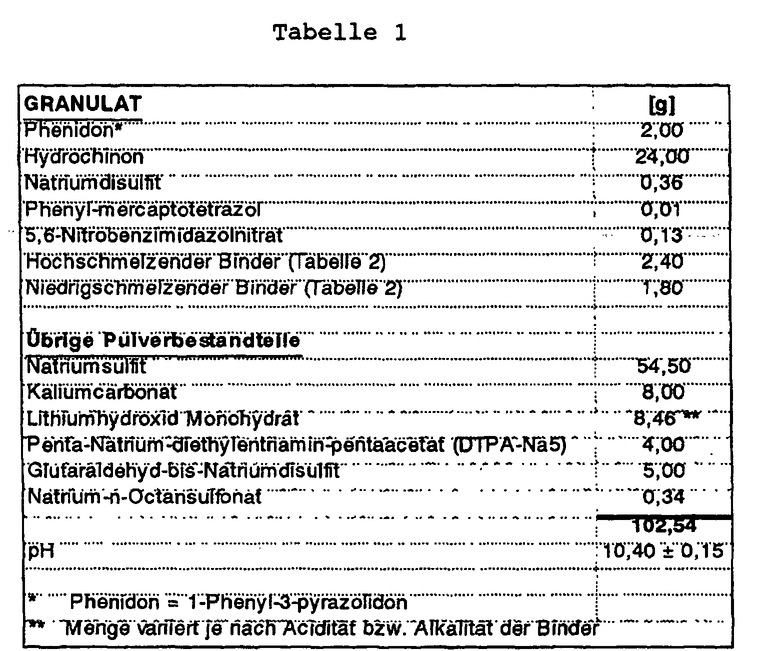

Das erhaltene Doppelschmelzgranulat wurde in einen Mischer gegeben und entsprechend der in Tabelle 1 wiedergegebenen Rezeptur die siebzigfachen Mengen der übrigen Pulverbestandteile hinzugefügt: 3,815 kg Natriumsulfit, 560 g Kaliumcarbonat, 624,4 g Lithiumhydroxid Monohydrat (Menge variiert je nach Acidität bzw. Alkalität der Binder), 280 g DTPA-Na5, Glutaraldehyd-bis-Natriumdisulfit und als Tablettengleitmittel 77 g Natrium-n-Octansulfonat.

Der so erhaltene "final blend" wurde auf einer hydraulischen Laborpresse mit konstantem Druck zu Tabletten mit einem Durchmesser von 30 mm und einem Sollgewicht (ca. 11 g ) verpreßt. Diese Menge wird zum Ansatz von 100 ml Röntgenentwickler-Regenerator benötigt. Härte und Lagerungsstabilität der Tabletten wurden wie folgt bestimmt:

Tablettenhärte: 5 Tabletten wurden mit dem Tablettenbruchfestigkeitstester TBH 30 der Fa. ERWEKA auf Bruchfestigkeit geprüft und der Mittelwert gebildet. Eine Härte von >200 N ist erforderlich, um Beschädigungen beim Transport zu vermeiden.

Lagerungsstabilität: Für einen beschleunigten Lagerungstest wird zu Versuchsbeginn die Härte von jeweils 5 Tabletten ermittelt. Parallel werden 10 Tabletten zu einem Liter Röntgenentwickler-Regenerator aufgelöst. Nach Zugabe eines handelsüblichen Starters wird in der so hergestellten Arbeitslösung ein unbelichteter Röntgenfilm (AGFA Curix HT 1000G) entwickelt und die Minimaldichte (D-min) densitometrisch ermittelt.

Anschließend werden weitere 5 bzw. 10 Tabletten in Beutel aus Aluminiumverbundfolie verschweißt und im Wärmeschrank bei 50 °C aufbewahrt. Nach 14 bzw. 28 Tagen wird ein Beutel entnommen und nach Abkühlen auf 20 °C die prozentuale Zunahme des Tablettenhärte-Mittelwertes und nach Auflösen von 10 Tabletten die Minimaldichte (D-min) bestimmt. Eine Abnahme der Härte bei der Lagerung ist unerwünscht, da dies erfahrungsgemäß mit Zersetzungsreaktionen in der Tablette einhergeht.

### Vergleichsbeispiel 1 a (nicht erfindungsgemäß)

Entsprechend Beispiel 1 wurden bei zwei Versuchen dieselben Mengen Rohstoffe in einen LÖDIGE M5 Chargenmischer mit beheizbarem Doppelmantel gegeben, jedoch statt der beiden Komponenten aus hochschmelzendem und niedrigschmelzendem Binder nur die addierte Menge (168 + 126 g) an den niedrigschmelzenden Bindern Polyethylenglykol 20.000 bzw. 6-Caprolactam eingesetzt. Die Temperatur des Wassers im Doppelmantel wurde auf 8 °C über dem Schmelzpunkt des niedrigschmelzenden Binders (siehe Tabelle 2) eingestellt, die Granulierungs- und Tablettierbedingungen entsprachen dem Beispiel 1.

### Vergleichsbeispiel 1 b (nicht erfindungsgemäß)

Die Rohstoffe gemäß Beispiel 1 wurden weder doppelt- noch einfachschmelzgranuliert, sondern ohne Zusatz von Bindern direkt zu Tabletten verpreßt. Die Ergebnisse des Lagerungstestes sind in Tabelle 2 dargestellt.

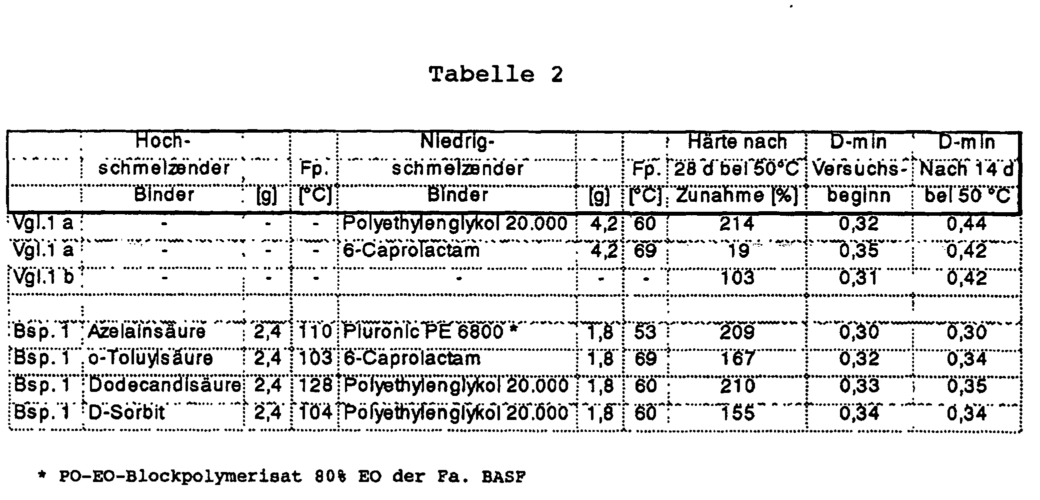

Aus der Tabelle ist ersichtlich, daß durch Doppelschmelzgranulation lagerungsstabile Röntgen-Entwicklertabletten oder - Pulvermischungen erhalten werden können, während bei einer Einfachschmelzgranulierung, selbst bei gleicher Bindermenge, zwar genügend harte, aber im Hinblick auf die Minimaldichte D-min nur ungenügend lagerstabile Tabletten erhalten werden. Die Einfachschmelzgranulierung weist keine Vorteile gegenüber dem nicht granulierten Röntgen-Entwickler auf (Vergl. 1 b). Der Anstieg von D-min deutet auf Zersetzungsreaktionen zwischen den Entwicklersubstanzen, der Aldehydkomponente und den Alkalien hin. Somit wird erklärlich, warum Pulvermischungen eines Röntgenentwicklers, die einen Glutaraldehydhärter enthalten, in einem Einpart-System nicht lagerstabil sind.

### II. Herstellung eines Erstentwicklers für Colorumkehrfilme in Tablettenform

### Beispiel 2

Gemäß der in Tabelle 3 aufgeführten Rezeptur zur Herstellung von 1 Liter Erstentwickler wurden zuerst die dreißigfachen Mengen der Einzelrohstoffe in einem LÖDIGE M5 Chargenmischer mit beheizbarem Doppelmantel einer einfachen Schmelzgranulation unterworfen: 30 g Natriumgluconat, 702 g Natriumsulfit, 81 g pulverisiertes Kaliumbromid, 0,21 g feinstpulverisiertes Kaliumiodid, 30 g Natriumthiocyanat, 120 g DTPA-Na5, 45 g Natriumhydrogencarbonat, 882 g Kaliumcarbonat und als niedrigschmelzender Binder 180 g Polyethylenglykol 6000.

Wassermanteltemperatur = 72 °C, Misch- und Granulationszeit = 6 Minuten.

Doppelschmelzgranulation von Dimezone S: 764,7 g Dimezone S wurden in einen auf 118 °C aufgeheizten LÖDIGE M5 Chargenmischer gefüllt und nach Erreichen einer Dimezone S-Produkttemperatur von 100 °C 535,3 g des hochschmelzenden Binders D-Sorbit (Fp. 94 °C) zugegeben. Der Messerkopf wurde für 2 min zugeschaltet, bis ein staubfreies Produkt erzielt wurde. Analog wie bei Beispiel 1 wurde nach Abkühlen der niedrigschmelzende Binder Polyethylenglykol 6000 (200 g) zugegeben. Das erhaltene Doppelschmelzgranulat wurde analytisch mittels HPLC auf den Gehalt an Dimezone S überprüft, wobei eine sehr gute Übereinstimmung mit dem theoretischen Wert von 51 % beweist, daß trotz der hohen Temperaturen keine Zersetzung des Dimezone S stattgefunden hat.

Das erhaltene Einfach-, das Doppelschmelzgranulat, die Isoascorbinsäure und das Tablettengleitmittel Natrium-n-Octansulfonat wurden in den in Tabelle 3 angegebenen Mengenverhältnissen in einen Mischer gegeben und 10 min lang bis zum Erhalt einer homogenen Mischung vermischt.

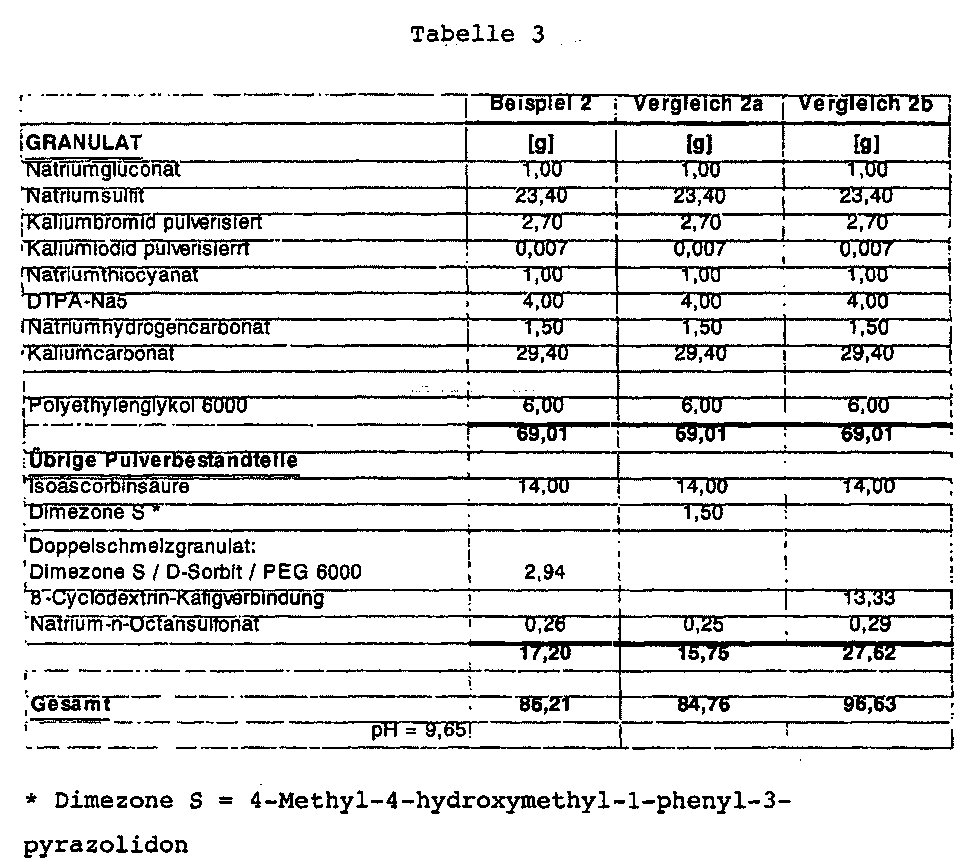

Der so erhaltene "final blend" wurde auf einer hydraulischen Laborpresse mit konstantem Druck zu Tabletten mit einem Durchmesser von 30 mm und einem Sollgewicht von 10 g verpreßt. Härte und Lagerungsstabilität der Tabletten wurden wie in Beispiel 1 bestimmt. Die Ergebnisse sind in Tabelle 4 aufgeführt.

### Vergleichsbeispiel 2 a (nicht erfindungsgemäß)

Gemäß Tabelle 3 wurden das Einfachschmelzgranulat, die Isoascorbinsäure, das Natrium-n-Octansulfonat zusammen mit dem unbehandelten Rohstoff Dimezone S zu Tabletten verpreßt. Die Ergebnisse des Lagerungsversuchs sind in Tabelle 4 enthalten.

### Vergleichsbeispiel 2 b (nicht erfindungsgemäß)

Herstellung einer β-Cyclodextrin-Einschlußverbindung mit Dimezone S: 200 g β-Cyclodextrin und 22,7 g Dimezone S wurden in 2200 ml Wasser suspendiert und unter Rühren 13 Stunden bei 80 °C gehalten. Nach Abkühlen wurden die ausgefallenen Kristalle abfiltriert, 3x mit kaltem Wasser gewaschen und bei 60 °C getrocknet. Analytisch wurde mittels HPLC ein Dimezone S-Gehalt von 11,25 % ermittelt, so daß 1,5 g Dimezone S in 13,33 g der Käfigverbindung enthalten sind.

In Analogie zu Beispiel 2 wurden Tabletten hergestellt und einem Lagerungstest unterzogen. Die Ergebnisse sind Tabelle 4 zu entnehmen.

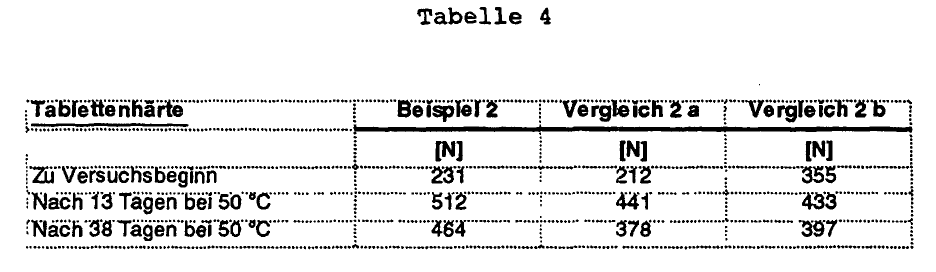

Wie aus Tabelle 4 zu sehen ist, wird die Lagerungsstabilität von Erstentwicklertabletten durch eine Doppelschmelzgranulation der empfindlichen Entwicklersubstanz Dimezone S deutlich erhöht. Dimezone S mit einer doppelten Schutzschicht aus D-Sorbit innen und PEG 6000 außen widersteht einem möglichen Angriff der Alkalien offenbar besser als das in β-Cyclodextrin eingeschlossene Dimezone S (Vergleich 2 b), das kaum stabiler als die völlig ungeschützte Entwicklersubstanz ist (Vergleich 2 a).

### III. Herstellung von feuchtigkeitsresistenten Granulaten für die Entwicklung von Colornegativfilmen

### Beispiel 3

Ermittlung der feuchtigkeitsanziehenden Substanzen der in Tabelle 5 angegebenen Rezeptur für 1 Liter eines Colornegativfilm-Entwicklers:

Jeweils 10 g der in Tabelle 5 angegebenen Substanzen wurden im Mörser zu einer einheitlichen Korngröße pulverisiert, in 100 ml Bechergläser gefüllt und alle gleichzeitig der atmosphärischen Luft ausgesetzt. Nach 1 und 3 Tagen wurden die prozentualen Gewichtszunahmen ermittelt, die ebenfalls in Tabelle 5 angegeben sind. Die Rohstoffe mit der höchsten Feuchtigkeitsaufnahme sind Kaliumcarbonat, DTPA-Na5, DSEHA und Natriumtoluolsulfonat, so daß diese vier Substanzen in erster Linie durch Doppelschmelzgranulation gegen Feuchtigkeitsaufnahme zu schützen sind, wenn feuchteresistente Granulate oder Tabletten hergestellt werden sollen.

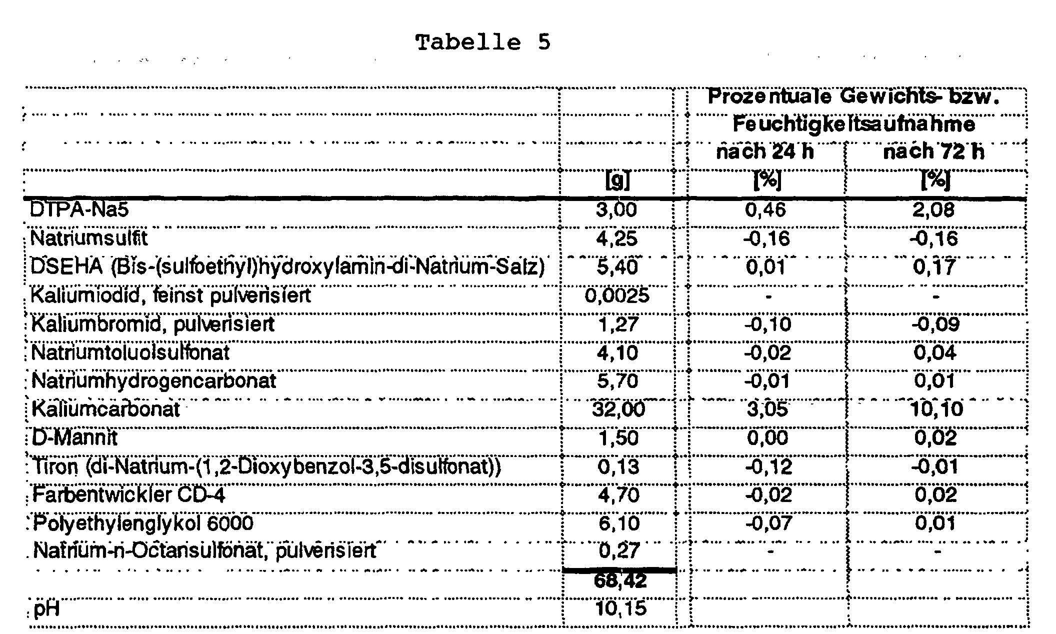

Doppelschmelzgranulation mit Farbstoff-Indikation:
Entsprechend der in Tabelle 6 wiedergegebenen Teilrezeptur zum Ansatz von 1 Liter Farbentwickler wurden die vierzigfachen Mengen der Einzelkomponenten in einen LÖDIGE M5 Chargenmischer mit beheizbarem Doppelmantel gegeben (1,28 kg Kaliumcarbonat, 120 g DTPA-Na5, 216 g DSEHA, 164 g Natriumtoluolsulfonat, 160 g des hochschmelzenden Binders und 1,2 g des feinpulverisierten roten Farbstoffs "Neozapon Rosa 478"). Wie in Beispiel 1 beschrieben wurde eine Granulation mit dem hochschmelzenden Binder durchgeführt, wobei sich der rote Farbstoff in der Schmelze löste und das entstandene Schmelzgranulat einheitlich rot gefärbt erschien. Wie in Beispiel 1 wurden im Anschluß daran 144 g des niedrigschmelzenden Binders (siehe Tabelle 7), jetzt mit zusätzlich 1,2 g des feinpulverisierten, blauen Farbstoffes "Savinyl Blau GLS", zugegeben und die zweite Schmelzgranulation auf dem niedrigeren Temperaturniveau durchgeführt. Der blaue Farbstoff löste sich hierbei in dem niedrigschmelzenden Binder und überzog dabei das gesamte Doppelschmelzgranulat mit der blauen Farbe. Bei ausreichender Menge an niedrigschmelzendem Binder konnte praktisch kein roter Farbton mehr erkannt werden.

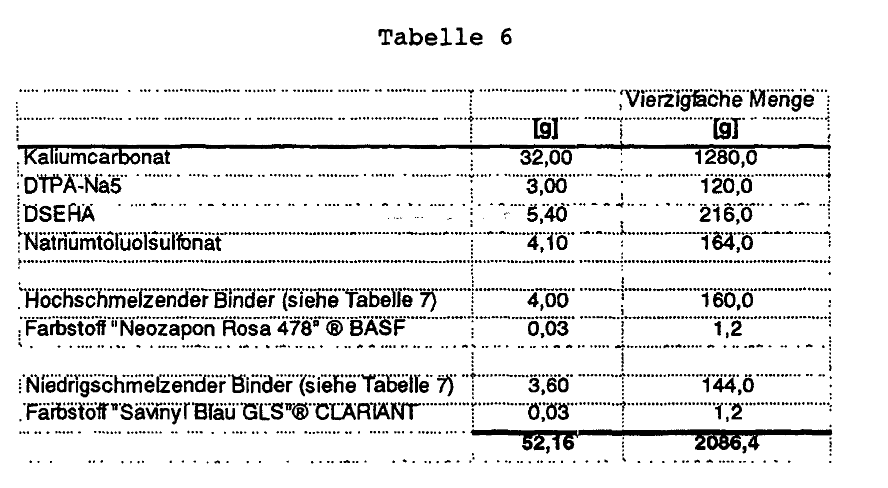

Jeweils 10,0 g der nach Tabelle 7 hergestellten Doppelschmelzgranulate wurden in 100 ml-Bechergläser gefüllt und alle Bechergläser wurden gleichzeitig einer Raumluft von 50 % rel. Feuchte bei 22 °C ausgesetzt. Die prozentuale Gewichtszunahme der Doppelschmelzgranulate nach 24 Stunden ist in Tabelle 7 aufgeführt.

### Vergleichsbeispiel 3 a (nicht erfindungsgemäß)

10 g einer Mischung der ungeschützten, nicht granulierten Rohstoffe Kaliumcarbonat, DTPA-Na5, DSEHA und Natriumtoluolsulfonat entsprechend der Mengenverhältnisse in Tabelle 6 wurden ebenfalls im 100 ml-Becherglas derselben Raumluft (50% rel. Feuchte, 22 °C) ausgesetzt. Die prozentuale Gewichtszunahme der Mischung nach 24 h enthält Tabelle 7.

### Vergleichsbeispiele 3 b (nicht erfindungsgemäß)

Analog zu Vergleichsbeispiel 1 a wurden bei vier Versuchen dieselben Mengen Rohstoffe (Tabelle 6: 1,28 kg Kaliumcarbonat, 120 g DTPA-Na5, 216 g DSEHA, 164 g Natriumtoluolsulfonat) in einen LÖDIGE M5 Chargenmischer mit beheizbarem Doppelmantel gegeben, jedoch statt der beiden Komponenten aus hochschmelzendem und niedrigschmelzendem Binder nur die addierte Menge (160 + 144 g) an den niedrigschmelzenden Bindern Pluronic PE 6800, Polyethylenglykol 6000, Polyethylenglykol 35.000 und 1,1,1-Tris(hydroxymethyl)propan (siehe Tabelle 7). Zusätzlich wurden 1,2 g des blauen Farbstoffes "Savinyl Blau GLS" hinzugegeben. Die Temperatur des Wassers im Doppelmantel wurde auf 8 °C über dem Schmelzpunkt des niedrigschmelzenden Binders (siehe Tabelle 7) eingestellt, die Granulierungs- und Tablettierbedingungen entsprachen sonst dem zweiten Teil des Beispiels 1. Die erhaltenen blauen Einfachgranulate wurden im 100 ml-Becherglas einer Raumluft von 50% rel. Feuchte bei 22 °C ausgesetzt. Die prozentualen Gewichtszunahmen der Einfachgranulate nach 24 h enthält Tabelle 7.

**Tabelle 7**

| | | | | | **Feuchtig-** |
|---|---|---|---|---|---|
| | | **Fp.** | | **Fp.** | **keitsauf-** |
| | **Hochschmelzender Binder** | **[°C]** | **Niedrigschmelzender Binder** | **[°C]** | **nahme in 24 h** |
| Vgl. 3a | - | - | - | - | 6,61% |
| | | | | | |
| Vgl. 3b | - | - | Pluronic PE 6800 | 53 | 5,24% |
| Vgl. 3b | - | - | Polyethylenglykol 6.000 | 60 | 5,13% |
| Vgl. 3b | - | - | Polyethylenglykol 35.000 | 60 | 4,91% |
| Vgl.3b | - | - | 1,1,1-Tris(hydroxymethyl)propan | 57 | 4,76% |
| | | | | | |
| Bsp. 3 a | Sebacinsäure | 131 | 6-Caprolactam | 69 | 3,68% |
| Bsp. 3 b | Sebacinsäure | 131 | Pluronic PE 6800 | 53 | 3,80% |
| Bsp. 3 c | Sebacinsäure | 131 | Polyethylenglykol 6.000 | 60 | 3,87% |
| Bsp. 3 d | Sebacinsäure | 131 | Polyethylenglykol 35.000 | 60 | 4,11% |
| Bsp. 3 e | Sebacinsäure | 131 | 1,1,1-Tris(hydroxymethyl)propan | 57 | 4,42% |
| Bsp. 3 f | Sebacinsäure | 131 | 2,5-Dimethyl-2,5-hexandiol | 88 | 3,99% |
| Bsp. 3 g | Di(trimethylolpropan) | 110 | 6-Caprolactam | 69 | 4,11% |
| Bsp. 3 h | Di(trimethylolpropan) | 110 | Pluronic PE 6800 | 53 | 4,10% |
| Bsp. 3 i | Di(trimethylolpropan) | 110 | Polyethylenglykol 6.000 | 60 | 4,27% |
| Bsp. 3 j | Di(trimethylolpropan) | 110 | Polyethylenglykol 35.000 | 60 | 4,13% |
| Bsp. 3 k | Di(trimethylolpropan) | 110 | 1,1,1-Tris(hydroxymethyl)propan | 57 | 4,13% |
| Bsp. 3 l | Di(trimethylolpropan) | 110 | 2,5-Dimethyl-2,5-hexandiol | 88 | 4,02% |
| Bsp. 3 m | Azelainsäure (Nonandicarbonsäure | 110 | 6-Caprolactam | 69 | 4,45% |
| Bsp. 3 n | Azelainsäure (Nonandicarbonsäure | 110 | 2,5-Dimethyl-2,5-hexandiol | 88 | 4,32% |
| Bsp. 3 o | N,N'-Dimethylharnstoff | 104 | Pluronic PE 6800 | 53 | 4,02% |
| Bsp. 3 p | N,N'-Dimethylharnstoff | 104 | Polyethylenglykol 6.000 | 60 | 4,47% |
| Bsp. 3 q | N,N'-Dimethylharnstoff | 104 | Polyethylenglykol 35.000 | 60 | 4,39% |
| Bsp. 3 r | N,N'-Dimethylharnstoff | 104 | 2,5-Dimethyl-2,5-hexandiol | 88 | 4,40% |
| Bsp. 3 s | o-Toluylsäure (2-Methylbenzoesäur | 103 | Polyethylenglykol 35.000 | 60 | 4,35% |
| Bsp. 3 t | o-Toluylsäure (2-Methylbenzoesäur | 103 | 1,1,1-Tris (hydroxymethyl)propan | 57 | 4,46% |
| Bsp. 3 u | o-Toluylsäure (2-Methylbenzoesäur | 103 | 2,5-Dimethyl-2,5-hexandiol | 88 | 4,17% |

Die Ergebnisse der Tabelle 7 zeigen, daß durch eine Einfachschmelzgranulation (Vergleich 3 b) die Feuchtigkeitsaufnahme gegenüber der unbehandelten Pulvermischung deutlich verlangsamt werden kann. Bei Doppelschmelzgranulation (Beispiele 3 a bis 3 u) läßt sich die Feuchteresistenz noch weiter erhöhen, so ist z.B. die Feuchtigkeitsempfindlichkeit des Doppelschmelzgranulats des Beispiels 3 a auf fast die Hälfte reduziert worden gegenüber der nicht granulierten Pulvermischung. Durch Optimierung der Mengenverhältnisse von hochschmelzendem zu niedrigschmelzendem Binder läßt sich die Feuchtigkeitsunempfindlichkeit von Granulaten noch weiter steigern.

### IV. Herstellung von feuchtigkeitsresistenten Tabletten für die Entwicklung von Colornegativfilmen

### Beispiel 4

Entsprechend der in Tabelle 8 wiedergegebenen Rezeptur wurde in Analogie zu Beispiel 1 zuerst eine Doppelschmelzgranulation im LÖDIGE Chargenmischer M5 mit den vierzigfachen Rohstoffmengen durchgeführt: 1,428 kg Kaliumcarbonat, 120 g DTPA-Na5, 216 g DSEHA, 164 g Natriumtoluolsulfonat und 160 g des hochschmelzenden Binders Sebacinsäure. Die Temperatur im Doppelmantel des Chargenmischers betrug 141 °C. Nach erfolgter Agglomeration aller Pulverbestandteile durch den hochschmelzenden Binder Sebacinsäure, wurde die Temperatur im Doppelmantel auf 68 °C abgesenkt und 144 g des niedrigschmelzenden Binders Polyethylenglykol 6000 (PEG 6000) zugegeben.

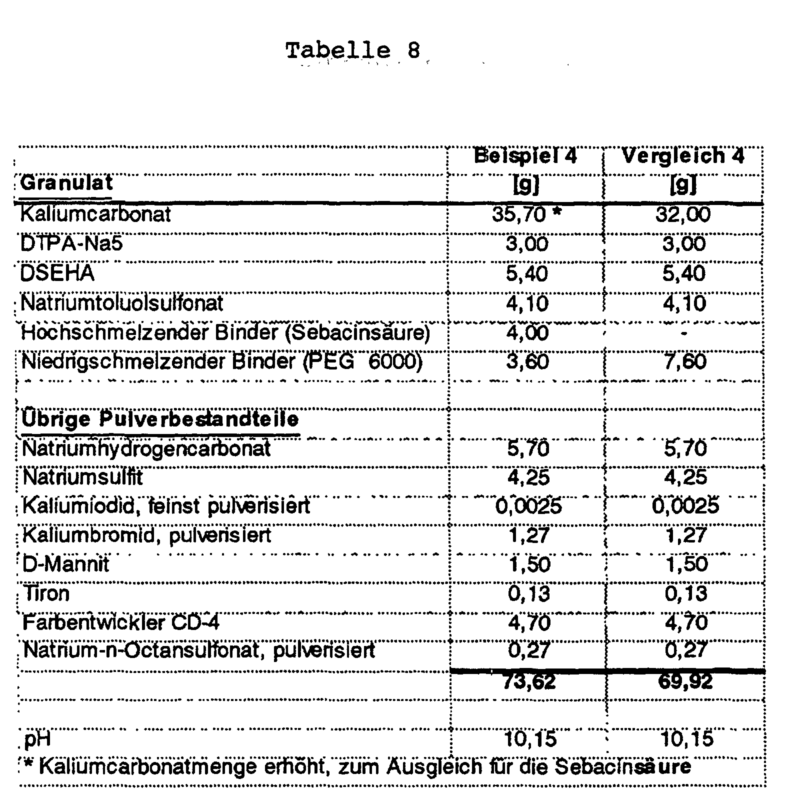

Nach 2 min schmolz das PEG 6000 und das entstandene Doppelschmelzgranulat wurde aus dem Chargenmischer entfernt und an der Luft auf Raumtemperatur abgekühlt.

Das erhaltene Doppelschmelzgranulat wurde in einen Mischer gegeben und entsprechend der in Tabelle 8 wiedergegebenen Rezeptur die vierzigfachen Mengen der übrigen Pulverbestandteile hinzugefügt: 228 g Natriumhydrogencarbonat, 170 g Natriumsulfit, 0,1 g feinstgepulvertes Kaliumiodid, 50,8 g gepulvertes Kaliumbromid, 60 g D-Mannit, 5,2 g Tiron, 188 g CD-4 und als Tablettengleitmittel 10,8 g Natrium-n-Octansulfonat. Der so erhaltene "final blend" wurde auf einer hydraulischen Laborpresse mit konstantem Druck zu Tabletten mit einem Durchmesser von 30 mm und einem Sollgewicht von 11,04 g verpreßt. Diese Menge wird zum Ansatz von 150 ml Farbentwickler benötigt, die zum Entwickeln eines Colornegativfilmes 135-36 erforderlich sind.

### Vergleichsbeispiel 4 (nicht erfindungsgemäß)

Wie in Vergleichsbeispiel 3 b wurden 1,28 kg Kaliumcarbonat, 120 g DTPA-Na5, 216 g DSEHA, 164 g Natriumtoluolsulfonat und 304 g des niedrigschmelzenden Binders PEG 6000 in einen LÖDIGE M5 Chargenmischer mit beheizbarem Doppelmantel gegeben. Die Temperatur des Wassers im Doppelmantel wurde auf 68 °C eingestellt. Nachdem die Pulverbestandteile zu einem staubfreien Granulat agglomeriert waren, wurde das Einfachschmelzgranulat aus dem Chargenmischer entleert und an der Luft auf Raumtemperatur abgekühlt. Entsprechend Beispiel 4 wurde mit den vierzigfachen Mengenbestandteilen der Tabelle 8 der "final blend" hergestellt und hieraus Tabletten mit einem Sollgewicht von 10,49 g gepreßt.

Die in Beispiel 4 und Vergleichsbeispiel 4 hergestellten Tabletten wurden einem beschleunigten Lagerungstest und einem Feuchteaufnahmetest unterzogen, die Ergebnisse sind in Tabelle 9 dargestellt.

Feuchteaufnahme: Jeweils 10 Tabletten werden gleichzeitig einzeln in 100 ml-Bechergläsern einer Raumluft von 50% rel. Feuchte und 22 °C ausgesetzt. Die prozentuale Gewichtszunahme wird in bestimmten Zeitabständen ermittelt und hieraus der Mittelwert gebildet.

**Tabelle 9**

| | **Tablettenhärte [N]** | | **Prozentuale Gewichtszunahme [%]** | |
|---|---|---|---|---|
| | zu Versuchsbeginn | 14 Tage bei 50 °C | nach 24 h | nach 48 h |
| Bsp. 4 | 36,6 | 58,2 | 1,89 | 2,93 |
| Vgl. 4 | 31,8 | 33,6 | 3,27 | 5,74 |

Wie Tabelle 9 zeigt, werden durch Doppelschmelzgranulation Granulate erhalten, aus denen Tabletten mit deutlich verringertem Feuchteaufnahmevermögen hergestellt werden können. Diese Tabletten müssen nicht einzeln verpackt werden, sondern der Anwender kann eine Sammelpackung je nach Bedarf mehrfach öffnen, ohne ein Zusammenkleben der Tabletten durch zu starke Feuchteaufnahme befürchten zu müssen. Zusätzlich erweisen sich die Tabletten, die durch Doppelschmelzgranulation hergestellt werden, lagerungsstabiler als die Tabletten von Vergleichsbeispiel 4.

## Patentansprüche

1. Verfahren zur Herstellung von als Granulat formulierten fotografischen Prozeßchemikalien, mit den Schritten:
a) Zusammengeben der Prozeßchemikalien mit wenigstens einem fotografisch inerten oder fotografisch förderlichen, wasserlöslichen, oberhalb 40°C schmelzenden ersten Hilfsstoff;
b) Erwärmen der Mischung auf eine Temperatur, die mindestens der Schmelztemperatur des ersten Hilfsstoffs entspricht;
c) Durchführen einer ersten Schmelzgranulierung unter Vermischung von Prozeßchemikalien und erstem Hilfsstoff;
d) Zusammengeben des in Schritt c) erhaltenen Granulats und ggf. weiterer fotografischer Prozeßchemikalien mit wenigstens einem fotografisch inerten oder fotografisch förderlichen, wasserlöslichen zweiten Hilfsstoff mit einer unter der Schmelztemperatur des ersten Hilfsstoffs liegenden Schmelztemperatur;
e) Erwärmen der Mischung auf eine Temperatur, die mindestens der Schmelztemperatur des zweiten Hilfsstoffs entspricht;
f) Durchführen einer zweiten Schmelzgranulierung unter Vermischung von Granulat aus Schritt c), ggf. weiterer Prozeßchemikalien und zweitem Hilfsstoff.

2. Verfahren nach Anspruch 1, **dadurch gekennzeichnet, daß** die Schmelztemperatur des zweiten Hilfsstoffes wenigstens 20°C unter der des ersten Hilfsstoffes liegt.

3. Verfahren nach Anspruch 1 oder 2, **dadurch gekennzeichnet, daß** der erste Hilfsstoff bei 50 - 180°C, vorzugsweise 60 - 130°C schmelzbar ist.

4. Verfahren nach einem der Ansprüche 1 bis 3, **dadurch gekennzeichnet, daß** der zweite Hilfsstoff bei 30 - 180°C, vorzugsweise 40 - 130°C schmelzbar ist.

5. Verfahren nach einem der Ansprüche 1 bis 4, **dadurch gekennzeichnet, daß** jeder Hilfsstoff einen oder mehrere der Komponenten ausgewählt aus der Gruppe bestehend aus Polyethylenglykol, Polyvinylalkohol, Aminoalkylmethacrylatcopolymeren, Methacrylsäure-Methacrylatcopolymeren, Methacrylsäure-Acrylatcopolymeren, Carbonsäuren, Propanolen, Propandiolen, Butanolen, Polyalkoholen und Tensiden enthält.

6. Verfahren nach Anspruch 5, **dadurch gekennzeichnet, daß** wenigstens einer der Hilfsstoffe Polyethylenglykol enthält.

7. Verfahren nach Anspruch 6, **dadurch gekennzeichnet, daß** in dem Polyethylenglykol weitere Hilfsstoffbestandteile gelöst und/oder suspendiert sind.

8. Verfahren zur Herstellung von als Tablette formulierten fotografischen Prozeßchemikalien, mit den Schritten:
a) Schmelzgranulieren wenigstens eines Teils der Tablettenrohstoffe in einem Verfahren gemäß einem der Ansprüche 1 bis 7;
b) Verpressen des Schmelzgranulats und ggf. der verbleibenden Tablettenrohstoffe zu einer Tablette.

## Claims

1. Process for the production of photographic processing chemicals formulated as granules, with the following steps:
a) mixing the processing chemicals together with at least one photographically inert or photographically beneficial, water-soluble, first auxiliary substance melting at more than 40°C;
b) heating the mixture to a temperature at least corresponding to the melting point of the first auxiliary substance;
c) carrying out a first melt granulation, blending the processing chemicals and the first auxiliary substance;
d) mixing the granules obtained in step c) and optionally other photographic processing chemicals with at least one photographically inert or photographically beneficial, water-soluble, second auxiliary substance with a melting point lower than the melting point of the first auxiliary substance;
e) heating the mixture to a temperature at least corresponding to the melting point of the second auxiliary substance;
f) carrying out a second melt granulation, blending granules from step c), optionally other processing chemicals and the second auxiliary substance.

2. Process according to claim 1, **characterised in that** the melting point of the second auxiliary substance is at least 20°C below that of the first auxiliary substance.

3. Process according to claim 1 or 2, **characterised in that** the first auxiliary substance can be melted at 50 - 180°C, preferably 60 - 130°C.

4. Process according to one of claims 1 to 3, **characterised in that** the second auxiliary substance can be melted at 30 - 180°C, preferably 40 - 130°C.

5. Process according to one of claims 1 to 4, **characterised in that** each auxiliary substance contains one or more of the components selected from the group consisting of polyethylene glycol, polyvinyl alcohol, aminoalkyl methacrylate copolymers, methacrylic acid-methacrylate copolymers, methacrylic acid-acrylate copolymers, carboxylic acids, propanols, propanediols, butanols, polyalcohols and surfactants.

6. Process according to claim 5, **characterised in that** at least one of the auxiliary substances contains polyethylene glycol.

7. Process according to claim 6, **characterised in that** other auxiliary substance components are dissolved and/or suspended in the polyethylene glycol.

8. Process for the production of photographic processing chemicals formulated as a tablet, with the following steps:
a) melt granulation of at least part of the tablet raw materials in a process according to one of claims 1 to 7;
b) compression of the melt-granulated material and optionally the remaining tablet raw materials into a tablet.

## Revendications

1. Procédé de préparation de produits chimiques de processus photographique formulés sous forme de granulé, comprenant les étapes suivantes :
a) Mélangeage des produits chimiques de processus avec au moins un adjuvant photographiquement inerte ou photographiquement utile, soluble dans l'eau et fondant au-delà de 40°C ;
b) Chauffage du mélange à une température qui correspond au moins à la température de fusion du premier adjuvant ;
c) Réalisation d'une première granulation à l'état fondu avec mélangeage des produits chimiques de processus et du premier adjuvant ;
d) Mélangeage du granulé obtenu à l'étape c) et le cas échéant d'autres produits chimiques de processus photographique avec au moins un deuxième adjuvant photographiquement inerte ou photographiquement utile, soluble dans l'eau et ayant une température de fusion inférieure à la température de fusion du premier adjuvant ;
e) Chauffage du mélange à une température qui correspond au moins à la température de fusion du deuxième adjuvant ;
f) Réalisation d'une deuxième granulation à l'état fondu avec mélangeage du granulé de l'étape c), le cas échéant d'autres produits chimiques de processus et du deuxième adjuvant.

2. Procédé selon la revendication 1, **caractérisé en ce que** la température de fusion du deuxième adjuvant est inférieure d'au moins 20°C à celle du premier adjuvant.

3. Procédé selon la revendication 1 ou la revendication 2, **caractérisé en ce que** le premier adjuvant est fusible à une température de 50 à 180°C, de préférence de 60 à 130°C.

4. Procédé selon l'une des revendications 1 à 3, **caractérisé en ce que** le deuxième adjuvant est fusible à une température de 30 à 180°C, de préférence de 40 à 130°C.

5. Procédé selon l'une des revendications 1 à 4, **caractérisé en ce que** chaque adjuvant contient un ou plusieurs composants choisis dans le groupe constitué par le polyéthylène glycol, l'alcool polyvinylique, les copolymères de méthacrylates d'aminoalkyle, les copolymères d'acide méthacrylique et de méthacrylate, les copolymères d'acide méthacrylique et d'acrylate, les acides carboxyliques, les propanols, les propanediols, les butanols, les polyalcools et les agents tensio-actifs.

6. Procédé selon la revendication 5, **caractérisé en ce que** l'un au moins des adjuvants contient du polyéthylène glycol.

7. Procédé selon la revendication 6, **caractérisé en ce que** d'autres constituants de l'adjuvant sont en solution et/ou en suspension dans le polyéthylène glycol.

8. Procédé de préparation de produits chimiques de processus photographique formulés sous forme de comprimés, comprenant les étapes suivantes :
a) Granulation à l'état fondu d'au moins une partie des matières premières des comprimés dans un procédé selon l'une des revendications 1 à 7 ;
b) Compression du granulé à l'état fondu et le cas échéant des matières premières restantes du comprimé pour former un comprimé.
